# EUROPEAN PATENT APPLICATION

(11) **EP 2 166 768 A2**
(43) Date of publication of application: **24.03.2010**
(21) Application number: 09010742.6
(22) Date of filing: 20.08.2009
(51) Int. Cl.: H04N 7/26, H04N 7/50

(54) **Method and system for multiple resolution video delivery**

(30) Priority: 19.09.2008 US 98283 P; 28.04.2009 US 431513
(71) Applicant: Broadcom Corporation, Irvine, CA 92617 (US)
(72) Inventor: Wan, Wade, Orange, CA 92867 (US); Heng, Brian, Irvine, CA 92618 (US); Chen, Xuemin, Rancho Santa Fé, CA 92067 (US)
(74) Representative: Jehle, Volker Armin

(57) **Abstract**

A scalable encoder is enabled to crop received video content to form multiple resolution video layers comprising a base video layer and one or more enhancement video layers in different spatial resolutions. The base video layer and the one or more enhancement video layers are successively encoded and combined to generate composite video to be communicated to one or more video reception units. Coding information of the base video layer is utilized for encoding each of the one or more enhancement video layers. A video reception unit is operable to decode first the coded base video layer followed by the coded enhancement video layer based on device requirement. The video reception unit adjusts resolution of the decoded base video layer to improve video quality based on corresponding decoded enhancement video layers. A logo inserted at a desired position inside a cropping window is processed accordingly at the video reception unit.

## Description

### CROSS-REFERENCE TO RELATED APPLICATIONS/INCORPORATION BY

### REFERENCE

This patent application makes reference to, claims priority to and claims benefit from United States Provisional Patent Application Serial No. 61/098,283 filed on September 19, 2008.

The above state application is hereby incorporated herein by reference in its entirety.

### FIELD OF THE INVENTION

Certain embodiments of the invention relate to digital video processing. More specifically, certain embodiments of the invention relate to a method and system for multiple resolution video delivery.

### BACKGROUND OF THE INVENTION

With the rapid developments in multimedia devices and networks, more and more users expect to enjoy multimedia services through various multimedia devices such as phones and/or IP TV over the Internet or wireless networks. This requires video coding techniques to provide different resolutions of the same video content to different multimedia devices depending on factors such as, for example, available channel bandwidth, processing power and/or memory resources available to each of the multimedia devices.

Among various video coding techniques, scalable video coding enables a seamless and dynamic adaptation of video content to network, device characteristics, and/or user requirements. There are various scalable video coding techniques such as spatial and temporal scalable coding that may be utilized to create video content at different resolutions and frame rates from the same video content. The spatial and temporal scalable coding techniques are developed rapidly in the past decade and are accepted in some main video coding standards such as MPEG-2, MPEG-4 and H.263++.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for multiple resolution video delivery, substantially as shown in and/or described in connection with at least one of the figures, as set forth more completely in the claims.
According to an aspect, a method for video coding comprises:
performing using one or more processors and/or circuits in a video processing system:
cropping received video content to form multiple resolution video layers comprising a base video layer and one or more enhancement video layers in different resolutions;
encoding said base video layer and said one or more enhancement video layers; and
generating composite video comprising said coded base video layer and said coded one or more enhancement video layers.
Advantageously, the method further comprises encoding said one or more enhancement video layer based on coding information associated with said base video layer.
Advantageously, said coding information associated with said base video layer comprises block motion vectors, block coding modes, quantization levels, and/or quantized residual data.
Advantageously, one or more video reception units decode said coded base video layer and decode said coded one or more enhancement video layer based on one or more of a corresponding device type utilized for video rendering, user requirement, and/or quality of said decoded base video layer.
Advantageously, said one or more video reception units scale said decoded base video layer to reduce a difference in resolution between said decoded base video layer and said decoded one or more enhancement video layer.
Advantageously:
said one or more video reception units scale said decoded base video layer to a resolution; and
said resolution is determined based on said decoded one or more enhancement video layer.
Advantageously, said one or more video reception units detect a transition point for decoding said coded one or more enhancement video layer.
Advantageously, said one or more video reception units gradually change resolution of said decoded base video layer before and/or after said detected transition point to reduce said difference in resolution between said decoded base video layer and said decoded one or more enhancement video layer.
Advantageously, said received video content comprises a logo outside a cropping window utilized for said cropping.
Advantageously, the method further comprises:
determining a position within said cropping window for said logo;
extracting received video content at said determined position from corresponding video layer;
removing said received video content at said determined position from said corresponding video layer; and
inserting said logo into said corresponding video layer at said determined position.
According to an aspect, a system for video coding comprises:
one or more processors and/or circuits for use a video processing system, wherein said one or more processors and/or circuits are operable to:
crop received video content to form multiple resolution video layers comprising a base video layer and one or more enhancement video layers in different resolutions;
encode said base video layer and said one or more enhancement video layers; and
generate composite video comprising said coded base video layer and said coded one or more enhancement video layers.
Advantageously, said one or more processors and/or circuits are operable to encode said one or more enhancement video layer based on coding information associated with said base video layer.
Advantageously, said coding information associated with said base video layer comprises block motion vectors, block coding modes, quantization levels, and/or quantized residual data.
Advantageously, one or more video reception units decode said coded base video layer and decode said coded one or more enhancement video layer based on one or more of a corresponding device type utilized for video rendering, user requirement, and/or quality of said decoded base video layer.
Advantageously, said one or more video reception units scale said decoded base video layer to reduce a difference in resolution between said decoded base video layer and said decoded one or more enhancement video layer.
Advantageously:
said one or more video reception units scale said decoded base video layer to a resolution; and
said resolution is determined based on said decoded one or more enhancement video layer.
Advantageously, said one or more video reception units detect a transition point for decoding said coded one or more enhancement video layer.
Advantageously, said one or more video reception units gradually change resolution of said decoded base video layer before and/or after said detected transition point to reduce said difference in resolution between said decoded base video layer and said decoded one or more enhancement video layer.
Advantageously, said received video content comprises a logo outside a cropping window utilized for said cropping.
Advantageously, said one or more processors and/or circuits are operable to:
determine a position within said cropping window for said logo;
extract received video content at said determined position from corresponding video layer;
remove said received video content at said determined position from said corresponding video layer; and
insert said logo into said corresponding video layer at said determined position.

These and other features and advantages of the present invention may be appreciated from a review of the following detailed description of the present invention, along with the accompanying figures in which like reference numerals refer to like parts throughout.

### BRIEF DESCRIPTION OF SEVERAL VIEWS OF THE DRAWINGS

FIG. 1A is a block diagram of an exemplary video coding system that is operable to utilize cropping for scalable video coding, in accordance with an embodiment of the invention.

FIG. 1 B is a block diagram of an exemplary layered video that is processed via cropping for scalable video coding, in accordance with an embodiment of the invention.

FIG. 2 is a diagram illustrating an exemplary scalable video encoder that is configured for cropping during scalable video coding, in accordance with an embodiment of the invention.

FIG. 3 is a diagram illustrating an exemplary video cropping operation that is utilized in a scalable video encoder, in accordance with an embodiment of the invention.

FIG. 4 is a diagram illustrating an exemplary scalable video decoder that is configured to decode coded cropped video content, in accordance with an embodiment of the invention.

FIG. 5 is a flow chart illustrating exemplary steps for scalable video encoding that utilizes a cropping to create multiple video layers, in accordance with an embodiment of the invention.

FIG. 6 is a flow chart illustrating exemplary steps for scalable video decoding that is utilized to decode coded cropped video content, in accordance with an embodiment of the invention.

FIG. 7 is a flow chart illustrating exemplary steps for processing decoded video layer content to improve video quality to viewers, in accordance with an embodiment of the invention.

### DETAILED DESCRIPTION OF THE INVENTION

Certain embodiments of the invention may be found in a system and/or method for multiple resolution video delivery. In various embodiments of the invention, a scalable video encoder may be operable to receive video content. The scalable encoder may be operable to crop the received video content to form multiple resolution video layers comprising a base video layer and one or more enhancement video layers in different spatial resolutions. The base video layer and one or more enhancement video layer may be encoded successively and combined to generate composite video to be communicated to one or more video reception units. Coding information such as block motion vectors, block coding modes, quantization levels, and/or quantized residual data, associated with the base video layer may be utilized for encoding the one or more enhancement video layer. A video reception unit may be enabled to receive and adaptively decode the coded base video layer as well as the coded enhancement video layer based on device type, user requirement, and/or quality of the decoded base video layer. The video reception unit may be operable to scale the decoded base video layer to reduce a difference in resolution between the decoded base video layer and the decoded one or more enhancement video layer. The video reception unit may be configured or otherwise operable to detect a transition point to start decoding the coded one or more enhancement video layer. The video reception unit may be operable to gradually change resolution of the decoded base video layer before and/or after the detected transition point to reduce the difference in resolution between the decoded base video layer and the decoded one or more enhancement video layer. A logo in the received video content may be enforced to a cropping window utilized for video cropping.

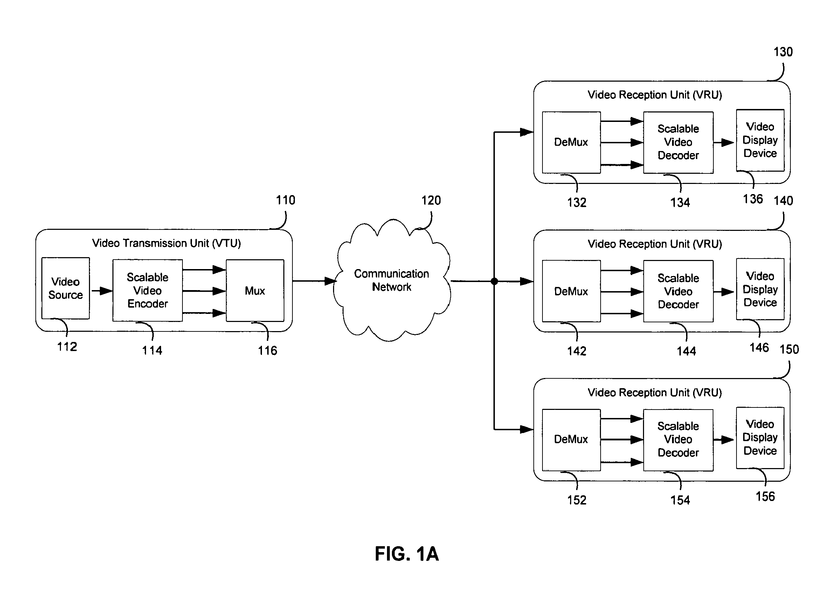

FIG. 1A is a block diagram of an exemplary video coding system that is operable to utilize cropping in scalable video coding, in accordance with an embodiment of the invention. Referring to FIG. 1A, there is shown a video transmission unit (VTU) 110, a communication network 120, and a plurality of video reception units (VRU) 130 through 150. The VTU 110 may comprise a video source 112, a scalable video encoder 114, and a multiplexer (MUX) 116, respectively. Each of the plurality of VRUs 130 through 150 may comprise a de-multiplexer (DMUX) such as 132, 142, and 152, a video scalable decoder such as 134, 144, and 154, and a video display device such as 136, 146, and 156.

The VTU 110 may comprise suitable logic, circuitry, interfaces and/or code that may be operable to provide coded video content to one or more video reception units such as the VRU 130 through 150. The VTU 110 may be configured to create multiple resolution video content from the same source video content to provide to different multimedia devices. Examples of the VTU 110 may comprise, but not limited to, a cable television head-end, a direct broadcast satellite head-end, a web server, and the like.

The video source 112 may comprise suitable logic, circuitry, interfaces and/or code that may be operable to capture source video content, which may be communicated to the scalable video encoder 114. The video source 112 may comprise, for example, a video camera, a magnetic storage medium (e.g., disk drive), or an optical storage medium (e.g., CD-ROM).

The scalable encoder 114 may comprise suitable logic, circuitry, interfaces and/or code that may be operable to encode the source video content from the video source 112 frame by frame. The scalable encoder 114 may be operable to perform video coding at varying degrees of video quality such as spatial resolution and/or signal-to-noise ratio (SNR). The scalable video encoder 114 may be configured to utilize various video compression algorithms such as specified in MPEG-2, MPEG-4, MPEG-4, AVC, VC1, VP6, and/or other video formats to form compressed or coded video content for the source video content provided by the video source 112. A "degree of video quality" may refer characteristics that may affect how the source video content may be perceived after being decoded. For example, the scalable video encoder 114 may be operable to encode the source video content from the video source 112 at multiple spatial resolutions such as 640 by 480 pixels or 800 by 600 pixels. In this regard, a cropping mechanism may be utilized by the scalable video encoder 114 to create multiple video layers comprising one base video layer and one or more enhancement video layers. The resolution of each of the multiple video layers may be different. The generated multiple video layers may be processed to provide different spatial resolution coded video from the same source video content to different VRUs such as VRU 130 through 150.

The MUX 116 may comprise suitable logic, circuitry, interfaces and/or code that may be enabled to merge a plurality of coded video layers into a single multiplexed video bitstream. The single multiplexed video bitstream may be transported over a communication network 120 to VRU 130 through 150.

The communication network 120 may be a wired or wireless communication network. The communication network 120 may be local area network, wide area network, the Internet, and the like.

Each of the VRUs 130 through 150 may comprise suitable logic, circuitry, interfaces and/or code that may be enabled to receive coded video bitstreams from the VTU 110 over the communication network 120. The received coded video bitstreams may comprise multiple resolution video of the same source video content. The multiple resolution video may be formed by one base video layer and one or more enhancement video layer of the same source video content. In this regard, the base video layer and one or more enhancement video may be created by using a cropping mechanism. Examples of the VRUs 130 through 150 may comprise, for example, set-top boxes, personal computers, and the like.

Although a point-to-multipoint connection between a single VTU 110 and multiple VRUs such as the VRU 130 through 150 is illustrated in FIG. 1A, the invention may not be so limited. Accordingly, a point-to-point connection between a single VTU such as the VTU 110 and a single VRU such as 130 may be supported without departing from the spirit and scope of various embodiments of the invention.

A de-multiplexer such as the DeMux 132 may comprise suitable logic, circuitry, interfaces and/or code that may be operable to separate a single multiplexed video bitstream into multiple video layers created by the scalable video encoder 110. These video layers may then be communicated the scalable video decoder 134.

A scalable video decoder such as the scalable video decoder 134 may comprise suitable logic, circuitry, interfaces and/or code that may be operable to decode coded video content over each of the video layers from the DeMux 132. In this regard, the scalable video decoder 134 may be configured to first decode coded video content over the base video layer, then, decode coded video content over one or more enhancement video layers for each and every video frames. Information such as coding information and quality of decoded video content over the base video layer may be utilized to assist video decoding over one or more enhancement video layers. The scalable video decoder 134 may be operable to process resulted decoded video content to communicate with the video display device 136 for display.

A video display device such as the video display device 136 may comprise suitable logic, circuitry, interfaces and/or code that may be enabled to display decoded video content over a base video layer and one or more enhancement video layers, which are created by the scalable video encoder 110. In this regard, the video display device 136 may be configured to initially display decoded video content over a base video layer. Quality of video viewed on the video display device 136 may be improved by adding decoded video content over one or more enhancement video layers. The video display device 136 may be enabled to communicate with the scalable video decoder 134 using various standard interfaces such as, for example, a high definition multimedia interface (HDMI), a standard definition multimedia interface (SDMI), and/or a Display port.

In operation, source video content captured via the video source 112 may be communicated to the scalable video encoder 114 for video processing. The scalable video encoder 114 may be configured to split the captured source video content into a base video layer and one or more enhancement video layers. The base video layer and one or more enhancement video layers may be created in different resolution by cropping. The scalable video encoder 114 may be enabled to create multiple resolution coded video by encoding video content over the base video layer and one or more enhancement video layer, respectively. The created multiple resolution coded video may be multiplexed via the MUX 116 into a single multiplexed video bitstream. The single video bitstream may be communicated with the VRU 130, for example, over the communication network 120.

At the VRU 130, the DeMux 132 may be enabled to receive and separate the single multiplexed bitstream into multiple video layers created by the scalable video encoder 110. These video layers may be then input into the scalable video decoder 134. The scalable video decoder 134 may be operable to decode coded video content over each of the multiple layers from the Demux 132. Coded video content over the base video layer may be decoded followed by decoding coded video content over one or more enhancement video layers every video frame. Decoded video content from the base video layer may be presented on the video display device 136. The quality of view on the video display device 136 may be improved by, for example, adding decoded video content from one or more enhancement video layers.

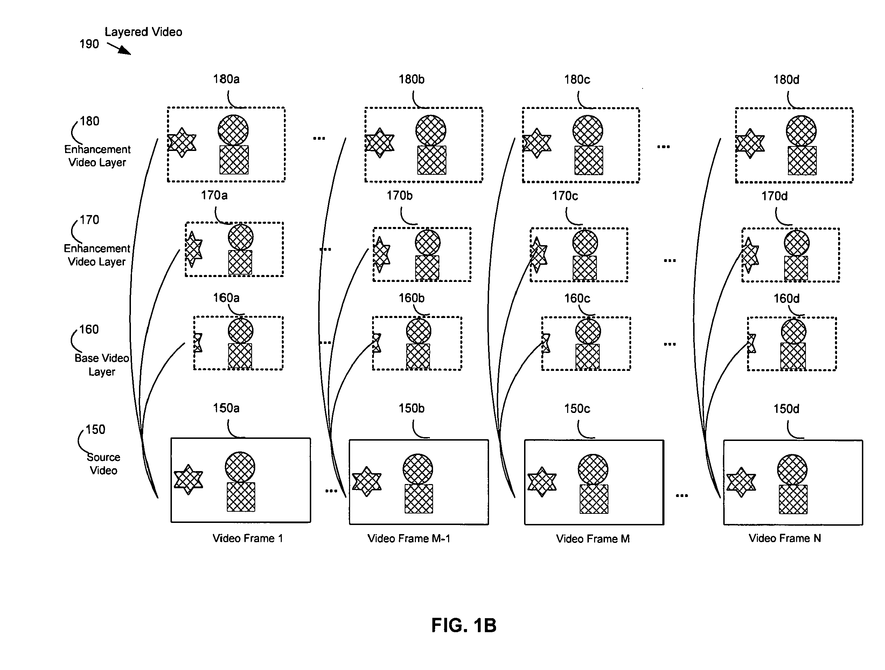

FIG. 1 B is a block diagram of an exemplary layered video that is processed via cropping for scalable video coding, in accordance with an embodiment of the invention. Referring to FIG.1B, there is shown a source video 150 and associated layered video comprising a base video layer 160, and one or more enhancement video layers such as an enhancement video layer 170 and an enhancement video layer 180.

Each video layer comprises a plurality of video frames. For example, the base video layer 160 may comprise video frames 160a through 160d. The enhancement video layer 170 may comprise video frames 170a through 170d. The enhancement video layer 180 may comprise video frames 180a through 180d. The source video 150 may be split into the base video layer 160 and one or more enhancement video layers such as the enhancement video layer 170 in various ways. For example, the base video layer 160 may comprise the lowest temporal, spatial, and quality representation of the source video 150. The enhancement video layers such as the enhancement video layer 180 may comprise additional information of the source video 150 in addition to the base video layer 160. The one or more enhancement video layers may be utilized to reconstruct the source video 150 using the base video layer 160 as a starting point. In this regard, the source video 150 may be parsed via cropping to size each corresponding video layer for a desired video resolution, an available bandwidth, and/or particular video quality. For example, the resolution of each resulted video layers may be different. The base video layer 160 may be formed by cropping the source video 150 for a standard definition video resolution. The enhancement video layer 170 may be formed by cropping the source video 150 for a high definition video resolution, for example.

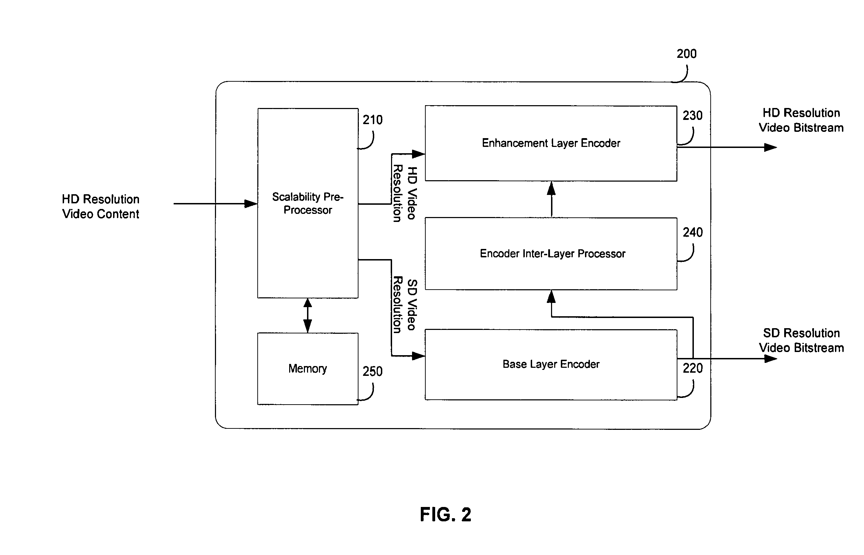

FIG. 2 is a diagram illustrating an exemplary scalable video encoder that is configured for cropping mechanism during scalable video coding, in accordance with an embodiment of the invention. Referring to FIG.2, there is shown a scalable video encoder 200 comprising a scalability pre-processor 210, a base layer encoder 220, an enhancement layer encoder 230, an encoder inter-layer processor 240, and a memory 250.

The scalability pre-processor 210 may comprise suitable logic, circuitry, interfaces and/or code that may be operable to process received source video content such as high definition (HD) resolution source video content. For example, the scalability pre-processor 210 may be operable to perform noise reduction to improve visual quality of the received HD resolution source video content and increase coding performance. The scalability pre-processor 210 may be configured to split the received HD resolution source video content into multiple resolution video content. In this regard, the scalability pre-processor 210 may be enabled to determine which portion of received HD resolution source video content may be encoded via the base layer encoder 220 or the enhancement layer encoder 230. The scalability pre-processor 210 may be enabled to determine a cropping window to crop a portion of the received HD resolution source video content to form a standard definition (SD) resolution video content. The cropping window may be determined by the scalability pre-processor 210 depending on various factors such as, for example, on-going quality of views, user preferences, and/or available channel capabilities. The cropping window may be determined statically or dynamically. The SD resolution video content may be encoded into a SD video bitstream via the base layer encoder 220.

Similarly, the scalability pre-processor 210 may be operable to form HD resolution video content by cropping at least a portion of received HD resolution source video content. For example, the HD resolution video content may be formed by subtracting the cropped video content from the received HD resolution source video content. The formed HD resolution video content may be encoded via the enhancement layer encoder 230 into a HD video bitstream.

The base layer encoder 220 may comprise suitable logic, circuitry, and/or code that may be operable to encode the SD resolution video content from the scalability pre-processor 210. The base layer encoder 220 may be configured to utilize various video compression algorithms comprising MPEG-2, MPEG-4, AVC, VC1, VP6, and/or other video formats to form coded SD video content for the SD resolution video content from the scalability pre-processor 210. The SD resolution video content may be encoded to create a SD video bitstream by intra coding, predictive coding and/or bi-directionally predictive coding. The SD video bitstream may be output to the MUX 116. Moreover, the base layer encoder 220 may be configured to provide base video layer coding information to the encoder inter-layer processor 240. The base video layer coding information may comprise block motion vectors, block coding modes, quantization levels, and/or quantized residual data, associated with the SD video bitstream.

The encoder inter-layer processor 240 may comprise suitable logic, circuitry, interfaces and/or code that may be operable to receive base video layer coding information provided by the base layer encoder 220. The encoder inter-layer processor 240 may be enabled to generate reference coding information using the received base video layer coding information. The reference coding information may be provided to the enhancement layer encoder 230 to enable enhancement video layer encoding.

The enhancement layer encoder 230 may comprise suitable logic, circuitry, interfaces and/or code that may be enabled to encode the HD resolution video content from the scalability pre-processor 210. The enhancement layer encoder 230 may be operable to utilize various video compression algorithms such as specified in MPEG-2, MPEG-4, AVC, VC1, VP6, and/or other video formats to form a HD video bitstream for the received HD resolution video content from the scalability pre-processor 210. The HD video bitstream may be created by intra coding, predictive coding or bi-directionally predictive coding, for example. The enhancement layer encoder 230 may be enabled to utilize reference coding information in creating the HD resolution video bitstream for the received HD resolution video content from the scalability pre-processor 210. The created HD resolution video bitstream may be output to the MUX 116.

The memory 250 may comprise suitable logic, circuitry, and/or code that may enable storing of information such as executable instructions and data that may be utilized by the scalability pre-processor 210 as well as the encoder inter-layer processor 240. The executable instructions may comprise various noise reduction algorithms that may be utilized by the scalability pre-processor 210 to process received HD resolution video content. The executable instructions may comprise encoding algorithms that may be utilized by the base layer encoder 220 and/or the enhancement layer encoder 230. The executable instructions may comprise algorithms that may be utilized to determine a cropping window for video cropping by the scalability pre-processor 210. The executable instructions may also comprise algorithms that may be utilized to creating reference coding information from base video layer coding information provided by the encoder inter-layer processor 240. The data may comprise multiple resolution video content such as, for example, HD resolution video content and SD resolution video content. The data may comprise coded video frames and coding information such as block motion vectors, block coding modes, quantization levels, and quantized residual data. The memory 250 may comprise RAM, ROM, low latency nonvolatile memory such as flash memory and/or other suitable electronic data storage.

Although a single enhancement video layer generated by the VTU 110 is illustrated in FIG. 1A, the invention may not be so limited. Accordingly, any number of enhancement video layers may be generated by the VTU 110 without departing from the spirit and scope of various embodiments of the invention.

In operation, the scalability pre-processor 210 may be operable to receive source video content such as HD resolution source video content from the video source 112. The scalability pre-processor 210 may be operable to split the received HD resolution source video content into multiple resolution video content comprising, for example, HD resolution video content and SD resolution video content. The resulted SD resolution video content and HD resolution video content may be generated by cropping the received HD resolution source video content using corresponding resolutions. The SD resolution video content may be encoded by the base layer encoder 220 into a SD resolution video bitstream. Associated base video layer coding information may be provided to the encoder inter-layer processor 240. The encoder inter-layer processor 240 may be enabled to generated reference coding information based on the received base video layer coding information. The encoder inter-layer processor 240 may provide the generated reference coding information to the enhancement layer encoder 230 to assist encoding the HD resolution video content received from the scalability pre-processor 210. The resulted HD resolution video bitstream may be multiplexed with the SD resolution video bitstream at the MUX 116 for transmission to the VRUs 130 through 150.

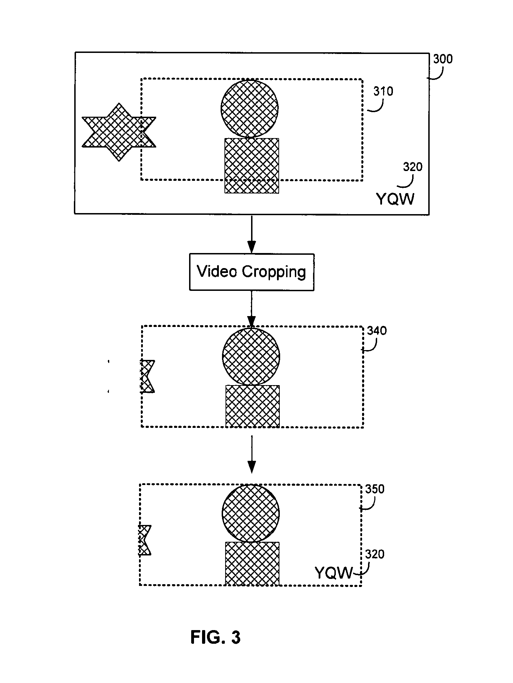

FIG. 3 is a diagram illustrating an exemplary video cropping operation that is utilized in a scalable video encoder, in accordance with an embodiment of the invention. Referring to FIG.3, there is shown a source video content 300, a cropped video content 340, and a refined cropped video content 350. The source video content 300 comprises a cropping area 310 and a logo 320 outside of the cropping area 300. The cropped video content 340 comprises the same video content indicated by the cropping area 310 in the source video content 300. The logo 320 may be placed in the cropped video content 340 to form a refined cropped video content. In this regard, the logo position of the logo 320 within the refined cropped video content 350 may be selected based on, for example, user preference. The cropped video content at the selected logo position may be cut and saved prior to the placement of the logo 320. The refined cropped video content 350 may be encoded by using, for example, the base layer encoder 220 to generate coded video content over the base video layer.

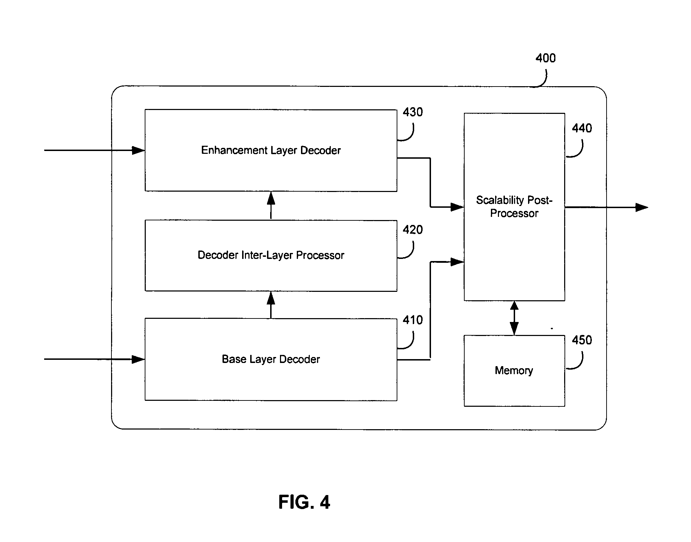

FIG. 4 is a diagram illustrating an exemplary scalable video decoder that is configured to decode coded cropped video content, in accordance with an embodiment of the invention. Referring to FIG.4, there is shown a scalable video decoder 400 comprising a base layer decoder 410, an enhancement layer decoder 420, a decoder inter-layer processor 430, a scalability post-processor 440, and a memory 450.

The base layer decoder 410 may comprise suitable logic, circuitry, interfaces and/or code that may be operable to decode coded video content such as, for example, the coded SD resolution video content from the DeMux 132. The base layer decoder 410 may be operable to utilize various video decompression algorithms such as specified in MPEG-2, MPEG-4, AVC, VC1, VP6, and/or other video formats to form decoded SD video content for the coded SD resolution video content from the DeMux 132. The decoded SD video content may be output to the scalability post-processor 440 for further video processing. In addition, the base layer decoder 410 may be configured to provide the decoded SD video content as well as associated base video layer coding information to the decoder inter-layer processor 430 to assist the enhancement layer decoder 420 for decoding coded video content over an enhancement video layer.

The decoder inter-layer processor 430 may comprise suitable logic, circuitry, and/or code that may be operable to receive base video layer coding information of a decoded SD video bitstream from the base layer decoder 410. The decoder inter-layer processor 430 may be operable to create reference coding information for the enhancement layer decoder 230 using the received base video layer coding information. The reference coding information may be determined depending on, for example, a mode of operation of the base layer decoder 410 and the enhancement layer decoder 420, and/or quality of view on the decoded SD video content over the base video layer. The decoder inter-layer processor 430 may be operable to communicate the reference coding information with the enhancement layer decoder 230 to assist enhancement video layer decoding.

The enhancement layer decoder 420 may comprise suitable logic, circuitry, interfaces and/or code that may be operable to decode coded video content such as, for example, the coded HD resolution video content from the DeMux 132. The enhancement layer decoder 420 may be enabled to utilize various video decompression algorithms such as specified in MPEG-2, MPEG-4, AVC, VC1, VP6, and/or other video formats to form decoded HD resolution video content from the DeMux 132. The decoded HD resolution video content may be output to the scalability post-processor 440. Moreover, the enhancement layer decoder 420 may be configured to utilize reference coding information provided by the decoder inter-layer processor 430 to assist enhancement video layer decoding. The decoded HD resolution video content may be provided to the scalability post-processor 440 for further video processing.

The scalability post-processor 440 may comprise suitable logic, circuitry, interfaces and/or code that may be operable to generate composite video content from decoded base video layer content and decoded enhancement video layer content. Depending on quality of viewing and/or user requirements, the scalability post-processor 440 may be operable to integrate or add the decoded base video layer content into the decoded enhancement video layer content as part of the enhancement video layer decoding process. Moreover, the scalability post-processor 440 may be operable to reassemble the decoded base video layer content and the decoded enhancement video layer content to provide better views. A noticeable jump in resolution between the decoded base video layer and the decoded enhancement video layer may cause content jumps on a video display device such as the video display device 136. In this regard, the scalability post-processor 440 may be configured to smoothen out the noticeable jump in resolution by scaling the decoded base video layer to a resolution, which may be determined based on the decoded enhancement video layer to ensure a desired degree of video quality to viewers. For example, the decoded base video layer may be scaled to the same resolution of the decoded enhancement video layer. Alternatively, the scalability post-processor 440 may be enabled to detect or determine a transition point where decoding on the coded enhancement video layer may start. The scalability post-processor 440 may be enabled to gradually change resolution of the decoded base video layer before and/or after the detected transition point in order to reduce the difference in resolution between the decoded base video layer and the decoded enhancement video layer.

The memory 450 may comprise suitable logic, circuitry, interfaces and/or code that may be operable to store information such as executable instructions and data that may be utilized by the scalability post-processor 440 as well as the decoder inter-layer processor 430. The executable instructions may comprise various image processing algorithms that may be utilized to process decoded HD resolution video content and the decoded SD resolution video content by the scalability post-processor 440. The executable instructions may comprise decoding algorithms that may be utilized by the base layer decoder 410 and/or the enhancement layer decoder 420. The executable instructions may also comprise algorithms that may be utilized to modify base video layer coding information by the decoder inter-layer processor 430. The data may comprise decoded HD resolution video content, decoded SD resolution video content, coded video frames, base video layer coding information such as block motion vectors, block coding modes, quantization levels, and quantized residual data. The memory 450 may comprise RAM, ROM, low latency nonvolatile memory such as flash memory and/or other suitable electronic data storage.

In operation, a coded base video layer and a coded enhancement video layer may be communicated to the base layer decoder 410 and to the enhancement layer decoder 420, respectively. The base layer decoder 410 may be configured to decode the received coded base video layer to form a decoded base video layer. The base layer decoder 410 may be enabled to provide the decoded base video layer as well as associated base video layer coding information to the decoder inter-layer processor 430. The decoder inter-layer processor 430 may be operable to provide reference coding information to the enhancement layer decoder 420 based on the received base video layer coding information. The reference coding information may be utilized by the enhancement layer decoder 420 to assist decoding received coded enhancement video layer. The decoded enhancement video layer may be provided to the scalability post-processor 440 for further video processing. For example, the scalability post-processor 440 may be operable to reassemble the decoded base video layer with the decoded enhancement video layer to form composite video content comprising a desired resolution. The scalability post-processor 440 may be enabled to adjust the resolution of the decoded base video layer to avoid content jumps on a video display device such as the video display device 136.

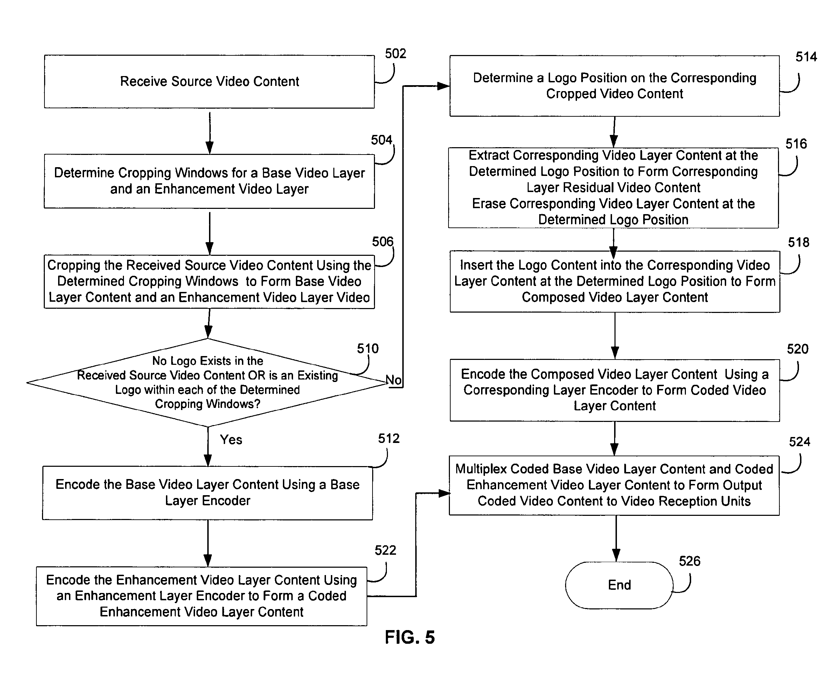

FIG. 5 is a flow chart illustrating exemplary steps for scalable video encoding that utilizes cropping to create multiple video layers, in accordance with an embodiment of the invention. The exemplary steps start with step 502, where the source video 112 may be enabled to receive source video content. In step 504, the scalability pre-processor 210 may be configured to determine cropping windows for a base video layer and an enhancement video layer in order to create multiple resolution video content from the received source video. The base video layer and the enhancement video layer may be in different resolution. In step 506, the scalability pre-processor 210 may be enabled to crop the received source video using the determined cropping windows to form base video layer content and enhancement video layer content, respectively. In step 510, it may be determined that whether no logo exists in the received source video content or a logo exists in the received source video content and resides within the determined cropping windows as described with respect to FIG.3. In instances where it may be determined that no logo exists in the received source video content or a logo exists in the received source video content resides within the determined cropping windows, then in step 512, the base video layer content may be encoded by using the base layer encoder 220. The exemplary process continues in step 522, where the enhancement video layer content may be encoded by using the enhancement layer encoder 230 to form coded enhancement video layer content. In step 524, the coded base video layer content and the coded enhancement video layer content may be multiplexed to form a single multiplexed video bitstream to be transmitted to one or more video reception units such as the VRU 130 over the communication network 120. The exemplary process may end at step 526.

In step 510, in instances where it may be determined that no logo exists in the received source video content or a logo in the received source video content resides within the determined cropping windows, then in step 514, the scalability pre-processor 210 may be enabled to determine a desired logo position within corresponding cropped video content. In step 516, video layer content at the determined logo position may be extracted to form residual video content. In step 518, the existing logo may be inserted into the determined desired logo position within the video layer content to form composed video content. In step 520, the composed video content may be encoded using a corresponding layer encoder. The exemplary steps may continue with step 522.

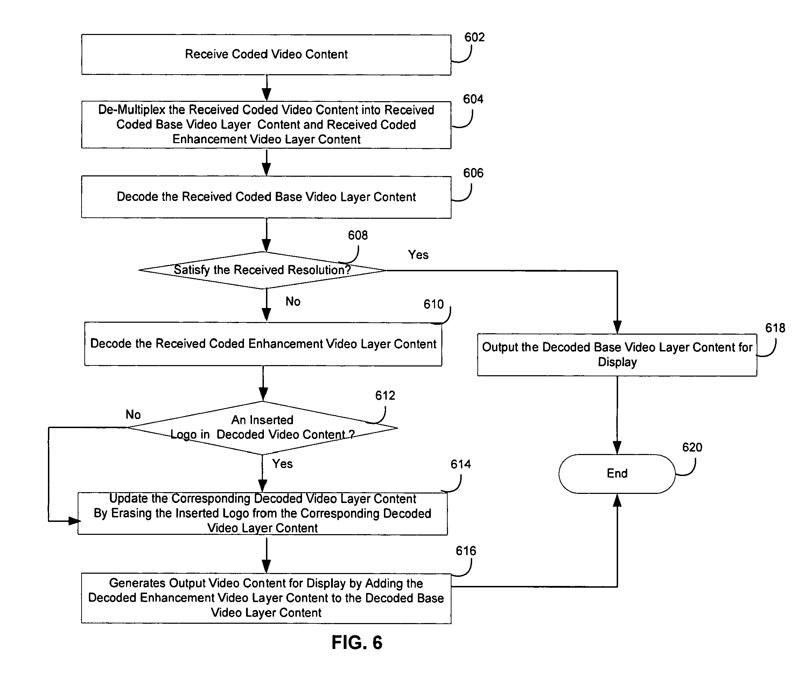

FIG. 6 is a flow chart illustrating exemplary steps for scalable video decoding that is utilized to decode coded cropped video content, in accordance with an embodiment of the invention. Referring to FIG. 6, the exemplary steps start with step 602, where a video reception unit such as the VRU 130 may be enabled to receive coded video content from the VTU 110 over the communication network 120. In step 604, the DeMux 132 may be enabled to de-multiplex the received coded video content into coded base video layer content and coded enhancement video layer content. In step 606, the scalable decoder 134 may be enabled to decode the coded base video layer content using the base layer decoder 410. In step 608, it may be determined whether the quality such as the resolution of the decoded base video layer content is satisfied. In instances where the resolution of the decoded base video layer content is not satisfied, then in step 610, the scalable decoder 134 may be enabled to decode the coded enhancement video layer content using the enhancement layer decoder 420. In step 612, it may be determined whether there is an inserted logo in the decoded video layer content. In instances where there is an inserted logo in the decoded video layer content, then in step 614, the inserted logo may be erased from the decoded video layer content. In step 616, the scalability post-processor 440 may be enabled to add the decoded enhancement video layer content to the decoded base video layer content to generate output video content for display on the video display device 136. The exemplary steps end in step 620.

In step 608, in instances where the resolution of the decoded base video layer content is satisfied, then in step 618, where the scalability post-processor 440 may be enabled to utilize the decoded base video layer content to generate output video content for display on the video display device 136. The exemplary steps end in step 620.

In step 612, in instances where there is no inserted logo in the decoded video layer content, then the exemplary steps continue in step 614.

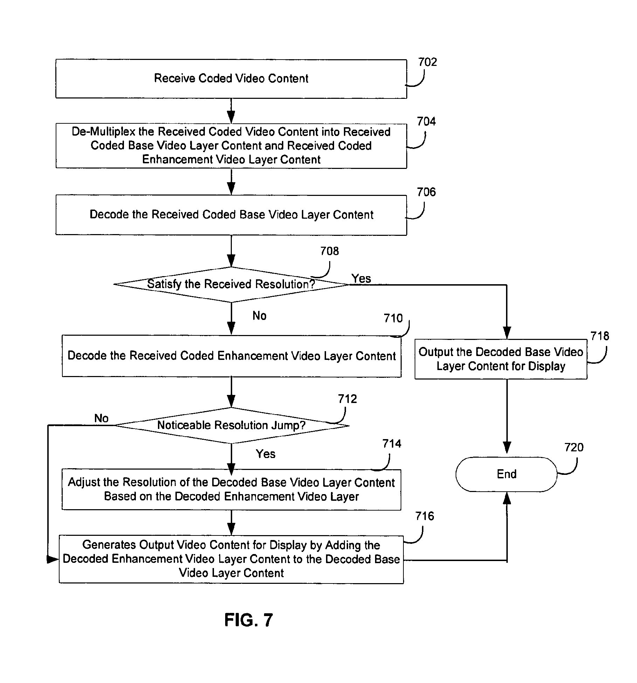

FIG. 7 is a flow chart illustrating exemplary steps for processing decoded video layer content to improve video quality to viewers, in accordance with an embodiment of the invention. Referring to FIG. 7, the exemplary steps start with step 702. The steps 702-710 are the same as presented by steps 602-610 as described with respect to FIG. 6. In step 712, it may be determined whether there is a noticeable or detected jump or difference in resolution between the decoded base video layer content and the decoded enhancement video layer content. In instances where there is a noticeable or detectable jump or difference in resolution between the decoded base video layer content and the decoded enhancement video layer content, then in step 714, the scalability post-processor 440 may be enabled to adjust the resolution of the decoded base video layer in order to reduce the difference in resolution between the decoded base video layer and the decoded enhancement video layer. For example, the decoded base video layer may be scaled to the same resolution of the decoded enhancement video layer. Alternatively, the scalability post-processor 440 may be enabled to detect or determine a transition point decoding on the coded enhancement video layer. The scalability post-processor 440 may be enabled to gradually change resolution of the decoded base video layer before and/or after the transition point in order to smoothen out the noticeable jump in resolution. In step 716, the scalability post-processor 440 may be operable to add the decoded enhancement video layer content to the decoded base video layer content to generate output video content for display on the video display device 136. The exemplary steps end in step 720.

In step 708, in instances where the resolution of the decoded base video layer content is satisfied, then in step 718, where the scalability post-processor 440 may be enabled to utilize the decoded base video layer content to generate output video content for display on the video display device 136. The exemplary steps end in step 720. In step 712, in instances where there is a noticeable jump or difference in resolution between the decoded base video layer content and the decoded enhancement video layer content, then the exemplary steps continue in step 716.

Aspects of a method and system for multiple resolution video delivery are provided. In accordance with various embodiments of the invention, the scalable video encoder 114 may be enabled to receive video content from the video source 112. The scalable encoder 114 may be enabled to crop the received video content to form multiple resolution video layers comprising a base video layer and one or more enhancement video layers as described in FIG.1B. The base video layer and one or more enhancement video layers may be associated with different spatial resolutions. As described with respect to FIG. 2, for example, the received video content may be split into one base video layer with a SD resolution and one enhancement video layer with a HD resolution. The scalable video encoder 114 may be enabled to encode the base video layer followed by the enhancement video layer successively. The base video layer and the enhancement video may be encoded by using the base layer encoder 220 and the enhancement layer encoder 230, respectively. The coded base video layer and the coded one or more enhancement video layer may be combined to generate composite video to be communicated to one or more video reception units such as the VRUs 130 through 150.

The enhancement layer encoder 230 may be enabled to utilize reference coding information provided by the encoder inter-layer processor 240 to encode the enhancement video layer. The reference coding information may be derived by the encoder inter-layer processor 240 from base video layer coding information such as, for example, block motion vectors, block coding modes, quantization levels, and/or quantized residual data. The VRUs 130 through 150 may be enabled to receive and decode coded base video layer and coded enhancement video layer. The VRUs 130 through 150 may be operable to adaptively decode the enhancement video layer based on various factors such as, for example, the type of the VRUs 130 through 150, user requirement, and/or quality of the decoded base video layer. As described with respect to, for example FIG. 4 and FIG .7, the VRUs 130 through 150 may be enabled to scale the decoded base video layer to reduce a difference in resolution between the decoded base video layer and the decoded one or more enhancement video layer. For example, the VRUs 130 through 150 may be enabled to scale the decoded base video layer to a resolution determined based on said decoded one or more enhancement video layer. The VRUs 130 through 150 may be configured to detect a transition point to start decoding the coded one or more enhancement video layer. The VRUs 130 through 150 may be enabled to gradually change resolution of the decoded base video layer before and/or after the detected transition point to reduce the difference in resolution between the decoded base video layer and the decoded one or more enhancement video layer.

As described with respect to, for example, FIG. 3 and FIG. 5, a cropping window may be selected, whether statically or dynamically, and utilized for corresponding video cropping. The received video content such as the source video content 300 may comprise a logo such as the logo 320, which is outside the selected cropping window 310. In this regard, the scalability pre-processor 210 may be enabled to determine a position for locating the logo 320 within the cropping window 310. The scalability pre-processor 210 may be enabled to extract corresponding received video content at the determined position from corresponding video layer, then, remove from the base video layer.

The logo 320 may be inserted into the base video layer at the determined position to form corresponding updated video layer such as 350. The updated video layer may be encoded via corresponding layer encoder. As described with respect to FIG. 4 and FIG. 6, a VRU such as, the VRU 130 may be configured to process the coded video layer, accordingly.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for multiple resolution video delivery.

Accordingly, the present invention may be realized in hardware, software, or a combination thereof. The present invention may be realized in a centralized fashion in at least one computer system, or in a distributed fashion where different elements may be spread across several interconnected computer systems. Any kind of computer system or other apparatus adapted for carrying out the methods described herein may be suited. A typical combination of hardware and software may be a general-purpose computer system with a computer program that, when being loaded and executed, may control the computer system such that it carries out the methods described herein. The present invention may be realized in hardware that comprises a portion of an integrated circuit that also performs other functions.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for video coding, the method comprising:
performing using one or more processors and/or circuits in a video processing system:
cropping received video content to form multiple resolution video layers comprising a base video layer and one or more enhancement video layers in different resolutions;
encoding said base video layer and said one or more enhancement video layers; and
generating composite video comprising said coded base video layer and said coded one or more enhancement video layers.

2. The method according to claim 1, comprising encoding said one or more enhancement video layer based on coding information associated with said base video layer.

3. The method according to claim 2, wherein said coding information associated with said base video layer comprises block motion vectors, block coding modes, quantization levels, and/or quantized residual data.

4. The method according to claim 1, wherein one or more video reception units decode said coded base video layer and decode said coded one or more enhancement video layer based on one or more of a corresponding device type utilized for video rendering, user requirement, and/or quality of said decoded base video layer.

5. The method according to claim 4, wherein said one or more video reception units scale said decoded base video layer to reduce a difference in resolution between said decoded base video layer and said decoded one or more enhancement video layer.

6. The method according to claim 4, wherein:
said one or more video reception units scale said decoded base video layer to a resolution; and
said resolution is determined based on said decoded one or more enhancement video layer.

7. A system for video coding, the system comprising:
one or more processors and/or circuits for use a video processing system, wherein said one or more processors and/or circuits are operable to:
crop received video content to form multiple resolution video layers comprising a base video layer and one or more enhancement video layers in different resolutions;
encode said base video layer and said one or more enhancement video layers; and
generate composite video comprising said coded base video layer and said coded one or more enhancement video layers.

8. The system according to claim 7, wherein said one or more processors and/or circuits are operable to encode said one or more enhancement video layer based on coding information associated with said base video layer.

9. The system according to claim 8, wherein said coding information associated with said base video layer comprises block motion vectors, block coding modes, quantization levels, and/or quantized residual data.

10. The system according to claim 7, wherein one or more video reception units decode said coded base video layer and decode said coded one or more enhancement video layer based on one or more of a corresponding device type utilized for video rendering, user requirement, and/or quality of said decoded base video layer.
